# EUROPÄISCHE PATENTSCHRIFT

(11) **EP 4 253 999 B1**
(45) Veröffentlichungstag und Bekanntmachung des Hinweises auf die Patenterteilung: **29.07.2026**
(21) Anmeldenummer: 22166032.7
(22) Anmeldetag: 31.03.2022
(51) Int. Cl.: G01S 17/08, G01S 17/04, G01S 7/481

(54) **OPTISCHER SENSOR**
OPTICAL SENSOR
CAPTEUR OPTIQUE

(43) Veröffentlichungstag der Anmeldung: 04.10.2023
(73) Patentinhaber: Leuze electronic GmbH + Co. KG, 73277 Owen/Teck (DE)
(72) Erfinder:
(74) Vertreter: Ruckh, Rainer Gerhard

(56) Entgegenhaltungen:
- EP-B1- 2 565 699
- KR-A- 20200 135 246
- US-A1- 2018 203 099

## Beschreibung

Die Erfindung betrifft einen optischen Sensor gemäß dem Oberbegriff des Anspruchs 1.

Derartige Sensoren dienen generell zur Erfassung von Objekten in einem Überwachungsbereich. Ein Beispiel für derartige Sensoren sind optische Sensoren in Form von Flächendistanzsensoren. Ein derartiger optischer Sensor weist einen Lichtstrahlen emittierenden Sender und einen Lichtstrahlen empfangenden Empfänger auf. Der Sender und der Empfänger bilden einen Distanzsensor. Weiterhin ist eine Ablenkeinheit vorgesehen, mittels derer die Lichtstrahlen periodisch im Überwachungsbereich geführt sind.

Die Lichtstrahlen werden über die Ablenkeinheit in den Überwachungsbereich geführt. Von einem Objekt zurückreflektierte Lichtstrahlen gelangen über die Ablenkeinheit zurück zum Empfänger. In einer Auswerteeinheit wird abhängig von Empfangssignalen des Empfängers ein Objektfeststellungssignal generiert.

Mit einem derartigen Sensor kann eine Positionsbestimmung von Objekten im Überwachungsbereich durchgeführt werden. Diese Positionsbestimmungen können beispielsweise für eine Schutzfeldüberwachung genutzt werden. Damit kann, insbesondere wenn der optische Sensor ein Sicherheitssensor ist, eine Gefahrenbereichsüberwachung an einer gefahrbringenden Anlage durchgeführt werden. Mit dem optischen Sensor wird dann als Objektfeststellungssignal ein Schaltsignal generiert, deren Schaltzustände angeben, ob sich ein Objekt im Schutzfeld befindet oder nicht.

Wird mit dem optischen Sensor ein Objekt im Schutzfeld detektiert, wird mit dem Schaltsignal die Anlage in einen sicheren Zustand überführt, insbesondere abgeschaltet.

Es ist auch möglich die Kontur oder Position von Objekten (Messwerte) zu erkennen und zu bestimmen und diese Ergebnisse über eine Schnittstelle auszugeben. Ebenso ist es möglich, die einzelnen Messwerte oder zusammengefasste Messwerte an eine externe Einheit über eine Schnittstelle auszugeben.

Bei komplexeren Überwachungsaufgaben werden typischerweise mehrere derartiger Sensoren, insbesondere optische Sensoren eingesetzt. Die optische Sensoren können sich derart beeinflussen, dass Lichtstrahlen des einen optischen Sensors in einen anderen optischen Sensor eingestrahlt werden, wodurch in diesem fehlerhafte Objektfeststellungssignale generiert werden, insbesondere derart, dass ein Objekt gemeldet wird, obwohl keines vorhanden ist, oder es können Messwerte verfälscht werden.

Auch durch andere externe Störeinstrahlungen können Fehldetektionen oder fehlerhafte Messwerte des Sensors verursacht sein.

Die EP 2 565 699 B1 betrifft einen Sicherheitslaserscanner zur Erfassung von Objekten in einem Überwachungsbereich mit einem Lichtsender zum Aussenden eines Sendelichtstrahls, einer drehbaren Ablenkeinheit zur periodischen Ablenkung des Sendelichtstrahls in den Überwachungsbereich, einem Lichtempfänger zum Erzeugen eines Empfangssignals aus dem von Objekten in dem Überwachungsbereich remittierten Lichtstrahl, einer Winkelmesseinheit zur Bestimmung der Winkelposition der Ablenkeinheit relativ zu dem Sicherheitslaserscanner, einem Drehratensensor zur Bestimmung der Orientierung des Sicherheitslaserscanners relativ zu seiner Umgebung sowie einer Auswertungseinheit, die anhand des Empfangssignals Messwerte erzeugt, die angeben, ob, in welcher Richtung und in welcher anhand der Lichtlaufzeit bestimmten Entfernung ein Objekt erfasst ist, wobei eine Korrektureinheit vorgesehen ist, welche Orientierungsänderungen des Sicherheitslaserscanners bezüglich der Drehachse der Ablenkeinheit bestimmt und den Einfluss der Orientierungsänderungen auf die Messwerte kompensiert. Der Sicherheitslaserscanner weist eine Absicherungseinheit und einen sicheren Ausgang auf, wobei die Absicherungseinheit unzulässige Objekteingriffe in Schutzbereiche innerhalb des Überwachungsbereichs erkennt und daraufhin ein Absicherungssignal über den sicheren Ausgang ausgibt. Die Korrektureinheit prüft, ob die Messwerte nach Kompensation durch die Korrektureinheit eine ausreichende Winkelauflösung aufweisen um eine sicherheitsrelevante Überwachungslücke zu verhindern. Die Korrektureinheit ist dafür ausgebildet, die Drehbewegung der Ablenkeinheit zu beschleunigen oder zu verlangsamen, insbesondere in Gegenrichtung der Orientierungsänderungen und in einem Maße entsprechend der Orientierungsänderungen.

Die US 2018/203099 A1 beschreibt einen Lidar-Sensor mit konstanter Drehzahl des Scan-Spiegels. Interferenzen durch andere Systeme werden erkannt und unterdrückt, indem der Laser-Puls-Frequenz ein Jittersignal überlagert wird.

Die KR 20200135246 A beschreibt ein Lidar-Sensor-System, bei dem die Laser-Pulsfrequenz und die Scan-Drehgeschwindigkeit in Abhängigkeit von der Objektentfernung eingestellt werden. Für die Objektdetektion werden mehrere Scans verwendet.

Der Erfindung liegt die Aufgabe zugrunde, die Funktionssicherheit eines Sensors der eingangs genannten Art zu verbessern.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft einen Sensor zur Erfassung von Objekten in einem Überwachungsbereich mit einem Sendestrahlen emittierenden Sender und einem Empfangsstrahlen empfangenden Empfänger. Mit einem Strahlführungsmittel, das eine Drehbewegung ausführt, werden die Sendestrahlen innerhalb aufeinanderfolgenden Scans periodisch innerhalb des Überwachungsbereichs geführt. In einer Auswerteeinheit wird abhängig von Empfangssignalen des Empfängers ein Objektfeststellungssignal generiert, wobei zur Generierung des Objektfeststellungssignals Empfangssignale mehrerer Scans herangezogen werden. Die Drehbewegung des Strahlführungsmittel mittels eines Antriebs wird derart generiert, dass einer mittleren Drehzahl Beschleunigungswerte überlagert sind, wodurch sich die Zeitdauer der einzelnen Scans, die mit dem Sensor zur Objekterfassung durchgeführt werden, ändert. Erfindungsgemäß werden die Beschleunigungswerte als eine zyklische Folge oder eine Zufallsfolge von Beschleunigungswerten generiert.

Die Erfindung betrifft auch ein entsprechendes Verfahren.

Bei dem erfindungsgemäßen Sensor werden zur Generierung eines Objektfeststellungssignals die Empfangssignale mehrerer Scans herangezogen.

Dadurch wird eine Mehrfachauswertung durchgeführt, wodurch die Detektionssicherheit des Sensors erhöht wird.

Vorteilhaft werden zur Generierung eines Objektfeststellungssignals die Empfangssignale mehrerer direkt aufeinanderfolgenden Scans herangezogen. Insbesondere werden zur Generierung eines Objektfeststellungssignals die Empfangssignale zweier direkt aufeinanderfolgender Scans herangezogen.

Die Mehrfachauswertung über mehrere Scans zur Generierung des Objektfeststellungssignals wird erfindungsgemäß mit einer Drehzahlvariation des Strahlführungsmittels kombiniert.

Die Drehbewegung des Strahlführungsmittels wird generell mittels eines Antriebs, insbesondere eines elektrischen Antriebs erzeugt. Erfindungsgemäß arbeitet der Antrieb derart, dass die Strahlführungsmittel eine Drehbewegung mit einer mittleren, insbesondere konstanten Drehzahl, ausführen, wobei dieser mittleren Drehzahl Beschleunigungswerte überlagert sind, die die mittlere Drehzahl in vorgegebener Weise ändern.

Damit werden auf einfache und effiziente Weise Fehldetektionen aufgrund externer Störeinstrahlungen reduziert oder vermieden.

Durch die der mittleren Drehzahl überlagerten Beschleunigungswerte ändert sich die Drehzahl der Strahlführungsmittel und damit der Zeitdauer der einzelnen Scans, die mit dem Sensor zur Objekterfassung durchgeführt werden. Damit ist ein Ausweichen auf externe Störeinstrahlungen möglich. Dies gilt insbesondere bei regelmäßigen externen Störeinstrahlungen, auf welche der Sensor durch eine veränderliche Drehzahl besonders gut ausweichen kann.

Während dieser Scans, die zur Generierung des Objektfeststellungssignals herangezogen werden, ändert sich vorteilhaft die Drehzahl der Strahlführungsmittel mittels der Beschleunigungswerte. Liegt eine regelmäßige Störeinstrahlung in den Sensor vor, so wird durch die Drehzahländerung diese Störeinstrahlung bei den Objektdetektionen in den einzelnen Scans als unregelmäßig registriert und kann so systematisch durch eine geeignete Auswertung eliminiert werden.

Dies ist besonders vorteilhaft, bei einem Einsatz mehrerer gleichartiger Sensoren. Dort kann es zu einer gegenseitigen Beeinflussung derart kommen, dass die Sendestrahlen eines Sensors direkt oder nach Reflexionen an einem Objekt in den Empfänger eines anderen Sensors eingestrahlt werden.

Diese gegenseitigen Beeinflussungen und damit verbundene Fehlerdetektionen können dadurch vermieden werden, dass die Strahlführungsmittel der Sensoren zwar mit derselben mittleren Drehzahl, jedoch mit unterschiedlichen Beschleunigungswerten arbeiten.

Gemäß einer ersten vorteilhaften Ausgestaltung werden die Beschleunigungswerte in einen dem Antrieb zugeordneten Drehmomentregler eingespeist.

In diesem Fall werden die Beschleunigungswerte unmittelbar genutzt, um die mittlere Drehzahl des Strahlführungsmittels gezielt zu ändern.

Gemäß einer zweiten vorteilhaften Ausgestaltung werden die Beschleunigungswerte in Drehzahländerungen umgerechnet, die der mittleren Drehzahl überlagert werden.

Insbesondere wird die Drehzahländerung durch Integration von Beschleunigungswerten erhalten.

In diesem Fall wird die Drehzahländerung in einen dem Antrieb zugeordneten Drehzahlregler eingespeist.

Bei dieser Ausführungsform werden demzufolge aus den Beschleunigungswerten abgeleitete Drehzahländerungen zur Beeinflussung der mittleren Drehzahl des Strahlführungsmittels genutzt.

Gemäß einer ersten Variante der Erfindung werden die Beschleunigungswerte systematisch generiert, d.h. die Beschleunigungswerte ändern sich gemäß einer bestimmten, zyklischen Folge. Insbesondere ist eine periodische Folge von Beschleunigungswerten möglich.

Gemäß einer zweiten Variante der Erfindung werden die Beschleunigungswerte zufällig generiert, d.h. es wird eine Zufallsfolge, insbesondere eine Pseudozufallsfolge von Beschleunigungswerten generiert.

Gemäß einer vorteilhaften Ausführungsform werden die Beschleunigungswerte nur kurzzeitig geändert, d.h. das Strahlführungsmittel wird zumeist mit der mittleren Drehzahl betrieben, wobei die Beschleunigungswerte nur kurzzeitige, insbesondere sporadische Drehzahländerungen bewirken, was für eine Reduzierung der Störungsempfindlichkeit des Sensors ausreicht.

Weiter vorteilhaft können die Beschleunigungswerte ereignisgesteuert generiert werden. Insbesondere führen externe, den Sensor beeinflussende Einflüsse zur Generierung der Beschleunigungswerte.

Besonders vorteilhaft werden die Beschleunigungswerte abhängig von Blendereignissen generiert.

Derartige Blendereignisse sind von Störlichteinstrahlungen gebildet, die externe Quellen, insbesondere weitere Sensoren, abstrahlen.

In der Auswerteeinheit des Sensors können insbesondere durch Analyse des Zeitverhaltens der von Empfängern empfangenen Empfangssignale Blendereignisse identifiziert und von den mit den Sendestrahlen des Sensors durchgeführten Objektdetektionen unterschieden werden.

So können Blendeereignisse, d.h. externe Störeinstrahlungen einmalig oder nur kurz auftauchen und dann wieder verschwinden, wogegen die Senderstrukturen des Sensors fortlaufend emittiert werden. Auch können Störeistrahlungen einem langsamen Driften unterworfen sein, was bei der Sendestruktur des Sensors nicht der Fall ist.

Gemäß einer vorteilhaften Ausführungsform wird die mittlere Drehzahl mittels eines Drehzahl-Index aus einem Drehzahl-Vektor ausgewählt.

Die Festlegung der mittleren Drehzahl erfolgt vorteilhaft im Produktionsprozess des Sensors.

Besonders vorteilhaft ist der Drehzahl-Index und/oder der Drehzahl-Vektor durch eine Prüfsumme abgesichert.

Dadurch wird eine fehlersichere Auswahl der mittleren Drehzahl für das Strahlführungsmittel ermöglicht.

Vorteilhaft ist der Drehzahl-Index ein Konfigurations-Parameter oder wird aus einem Konfigurations-Parameter abgeleitet.

Insbesondere weist der Sensor eine Seriennummer auf, wobei dann der Drehzahl-Index aus der Seriennummer abgeleitet wird.

Der erfindungsgemäße Sensor kann prinzipiell ein Radarsensor sein. Im Falle eines Radarsensors kann die Drehbewegung einer Antenne oder die Rotation einer der Antennenkeule beeinflusst werden. Die Rotation einer Antennenkeule kann statt durch mechanische Mittel z.B, auch durch phasenverschobene Ansteuerung von Einzelantennen erfolgen.

Besonders vorteilhaft ist der Sensor als optischer Sensor ausgebildet. Dann weist der Sensor einen Lichtstrahlen emittierenden Sender und einen Lichtstrahlen empfangenden Empfänger auf.

In beiden Fällen kann gemäß einer ersten Variante der Sender und der Empfänger in einem rotierenden Messkopf gelagert sein, welcher das Strahlführungsmittel bildet.

Der Sender und der Empfänger sind dann ortsfest im Messkopf angeordnet. Durch die Drehbewegung des Messkopfs werden der Sender und der Empfänger mitgedreht, so dass die Sendestrahlen des Senders periodisch den Überwachungsbereich überstreichen.

Gemäß einer zweiten Variante sind die Sendestrahlen über eine rotierende Ablenkeinheit geführt, die das Strahlführungsmittel bildet.

Insbesondere kann die Ablenkeinheit einen Drehspiegel oder ein Polygonspiegelrad aufweisen.

Der Sender und der Empfänger werden dann ortsfest in einem Gehäuse des Sensors untergebracht. Die Sendestrahlen werden durch die rotierende Ablenkeinheit periodisch im Überwachungsbereich geführt.

Besonders vorteilhaft ist der Sensor als Flächendistanzsensor, das heißt als scannender Distanzsensor ausgebildet. Innerhalb jedes Scans wird die Distanz eines Objekts insbesondere durch eine Lichtlaufzeitmessung bestimmt. Dabei werden über mehrere Scans Mehrfach-Distanzmessungen durchgeführt. Da sich das zu detektierende Objekt während mehrerer aufeinanderfolgenden Scans nicht oder nicht wesentlich bewegt, werden für mehrere aufeinanderfolgende Scans geringfügig unterschiedliche Distanzwerte erhalten, wenn eine tatsächliche Objektdetektion mit Schutzfeldverletzung vorliegt. Dies bedeutet, dass die Zeitdifferenz zwischen Aussenden des Sendestrahls und Empfangen des Empfangssignals aufeinanderfolgende Scans oder aufeinanderfolgende Messungen sich nur geringfügig unterscheidet.

Bei einer Störeinstrahlung von einem anderen Sensor variiert jedoch die Zeitdifferenz zwischen Aussenden des Sendestrahls und Empfangen des Empfangssignals bedingt durch die erfindungsgemäße Drehzahlvariation mit Beschleunigungswerten, die für die einzelnen Sensoren unterschiedlich sind. Damit können derartige Störeinstrahlungen durch Auswertungen über mehrere Scans als Fehlersignale identifiziert und ausgeblendet werden, wodurch Fehldetektionen vermieden werden.

Gemäß einer vorteilhaften Ausführungsform ist der Sensor ein Sicherheitssensor.

Der Sicherheitssensor weist einen fehlersicheren Aufbau auf, was insbesondere durch eine redundant aufgebaute Auswerteeinheit erreicht wird. Beispielsweise kann die Auswerteeinheit aus zwei sich zyklisch gegenseitig überwachenden Rechnereinheiten bestehen.

Der Sicherheitssensor kann in sicherheitstechnischen Anwendungen eingesetzt werden, insbesondere zur Gefahrenbereichsüberwachung an gefahrbringenden Anlagen. Insbesondere kann der Sicherheitssensor auch an einer mobilen Einheit wie zum Beispiel einem Fahrzeug angeordnet sein, um deren Vorfeld zu überwachen.

Gemäß einer vorteilhaften Weiterbildung weist der Sensor eine Schnittstelle zum Anschluss an eine externe Steuereinheit auf.

Dabei werden über die Schnittstelle Messdaten an die externe Steuereinheit übertragen.

Insbesondere bildet die externe Steuereinheit ein Navigationssystem aus.

Weiterhin kann der Sensor auf einem fahrerlosen Transportsystem installiert sein. Der Sensor dient dann zur Kollisionsüberwachung im Vorfeld des fahrerlosen Transportsystems.

In beiden Fällen ist der Sensor vorteilhaft ein Flächendistanzsensor, der Positionswerte von der Umgebung des Sensors erfasst.

Die Erfindung wird im Folgenden anhand der Zeichnungen erläutert. Es zeigen:
- Figur 1:: Erstes Ausführungsbeispiel des erfindungsgemäßen Sensors.
- Figur 2:: Zweites Ausführungsbeispiel des erfindungsgemäßen Sensors.
- Figur 3:: Schematische Darstellung (Draufsicht) einer Sensoranordnung mit dem Erfindungsgemäßen Sensor auf einem Fahrzeug.
- Figur 4:: Blockschaltbild einer Sensoranordnung gemäß Figur 3.
- Figur 5:: Zeitdiagramme von Drehzahlen der Strahlführungsmittel des Sensors der Figuren 1 bis 4 bei systematisch wechselnden Beschleunigungswerten
a) mittlere Drehzahl.
b) Drehzahländerung.
c) resultierende Drehzahl.
- Figur 6:: Zeitdiagramm von Drehzahlen der Strahlführungsmittel des Sensors gemäß den Figuren 1 bis 4 bei stochastisch wechselnden Beschleunigungswerten
a) mittlere Drehzahl.
b) Drehzahländerung.
c) resultierende Drehzahl.
- Figur 7:: Anordnung mit zwei erfindungsgemäßen Sensoren.
- Figur 8:: Erstes Zeitdiagramm für die Anordnung gemäß Figur 5.
- Figur 9:: Zweites Zeitdiagramm für die Anordnung gemäß Figur 5.
- Figur 10:: Drittes Zeitdiagramm für die Anordnung gemäß Figur 5.

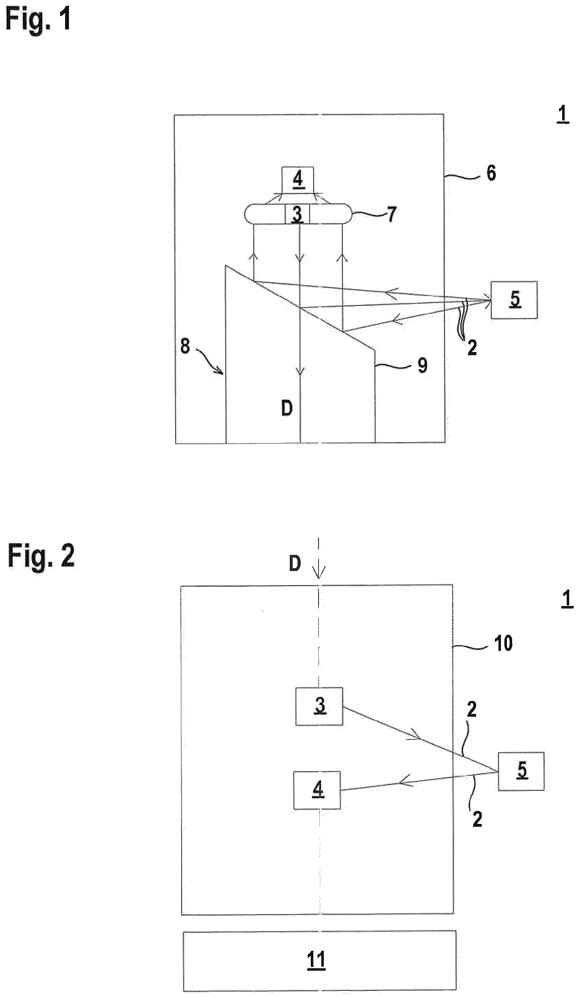

Die Figuren 1 und 2 zeigen Ausführungsbeispiele des erfindungsgemäßen Sensors 1. Der Sensor 1 kann prinzipiell als Radarsensor ausgebildet sein. In den vorliegenden Ausführungsbeispielen ist der Sensor 1 als optischer Sensor ausgebildet.

Figur 1 zeigt ein Ausführungsbeispiel eines optischen Sensors in Form eines Flächendistanzsensors, das heißt eines scannenden Distanzsensors. Zur Durchführung von Distanzmessungen weist der optische Sensor einen Lichtstrahlen 2 emittierenden Sender 3 und einen Lichtstrahlen 2 empfangenden Empfänger 4 auf. Der Sender 3 emittiert Lichtstrahlen 2 in Form von Lichtimpulsen. Wie Figur 1 zeigt, werden die Lichtstrahlen 2 an einem zu detektierenden Objekt 5 reflektiert, wobei die entsprechende Lichtlaufzeit der Lichtimpulse zum Objekt 5 und zurück zum optischen Sensor für die Distanzbestimmungen ausgewertet werden.

Wie Figur 1 zeigt, sind die Sensorkomponenten der optischen Sensoren in einem Gehäuse 6 integriert, wobei der Sender 3 sowie der Empfänger 4 mit einer vorgeordneten Sendeoptik beziehungsweise Empfangsoptik 7 stationär im Gehäuse 6 angeordnet sind. Mit dem optischen Sensor erfolgt eine Objektdetektion in einem flächigen Erfassungsbereich dadurch, dass die Lichtstrahlen 2 mittels einer Ablenkeinheit 8 periodisch abgelenkt werden. Die Ablenkeinheit 8 ist motorisch angetrieben und umfasst einen um eine Drehachse D drehbaren Drehspiegel 9, an dem die Lichtstrahlen 2 abgelenkt werden. Anstelle eines Drehspiegels 9 kann auch ein Polygonspiegelrad vorgesehen sein.

Figur 2 zeigt eine Variante des Flächendistanzsensors gemäß Figur 1. In diesem Fall erfolgt die periodische Ablenkung der Lichtstrahlen 2 dadurch, dass der Sender 3 und der Empfänger 4 in einem um eine Drehachse D drehbaren Messkopf 10 angeordnet sind, wobei der Messkopf 10 auf einem Sockel 11 drehbar gelagert ist.

Sowohl die Ablenkeinheit 8 des Sensors 1 gemäß Figur 1 als auch der Messkopf 10 des Sensors 1 gemäß Figur 2 bilden ein Strahlführungsmittel mittels dessen die Lichtstrahlen 2 periodisch in einem Überwachungsbereich abgelenkt werden, das heißt die Lichtstrahlen 2 überstreichen in aufeinanderfolgenden Scans den Überwachungsbereich.

Der Sensor 1 weist eine in den Figuren 1 und 2 nicht dargestellte Auswerteeinheit auf, in der die Empfangssignale des Empfängers 4 ausgewertet werden können.

Für den Einsatz im Bereich der Sicherheitstechnik sind die Sensoren 1 gemäß den Figuren 1 und 2 als Sicherheitssensoren ausgebildet und weisen einen fehlersicheren Aufbau auf, der beispielsweise durch eine redundante Auswerteeinheit in Form zweier sich zyklisch gegenseitig überwachender Prozessoren realisiert werden kann.

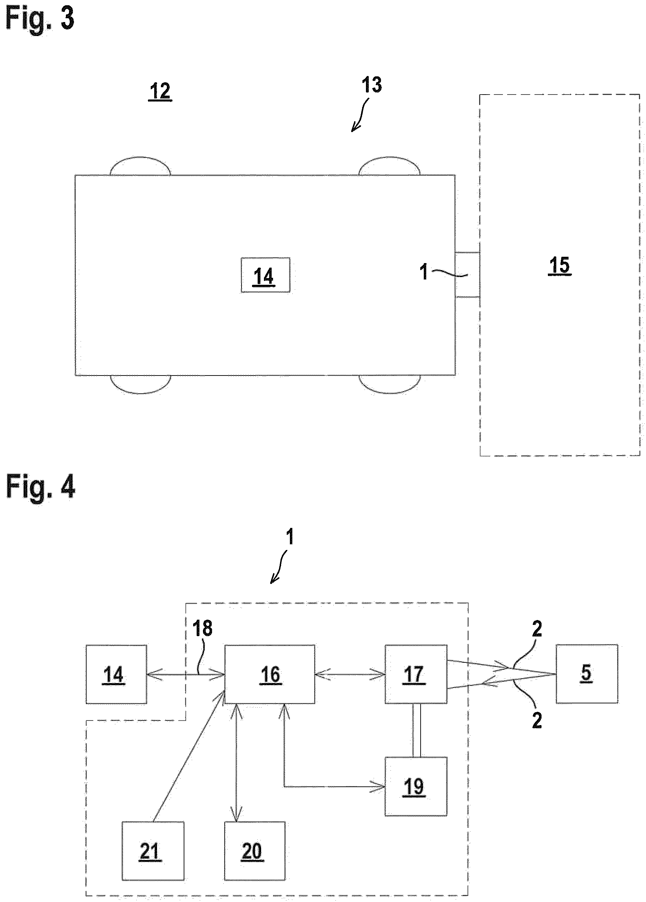

Figur 3 zeigt eine Sensoranordnung 12 mit einem Sensor 1 gemäß den Figuren 1 oder 2 auf einem Fahrzeug 13, wobei das Fahrzeug 13 von einem fahrerlosen Transportsystem gebildet sein kann. Das Fahrzeug 13 wird von einer Fahrzeugsteuerung 14 gesteuert.

Mit dem als Sicherheitssensor ausgebildeten Sensor 1 wird eine Kollisionsüberwachung durchgeführt. Hierzu wird im Sicherheitssensor ein gegebenenfalls geschwindigkeitsabhängiges Schutzfeld 15 vorgegeben, welches das Vorfeld des Fahrzeugs 13 abdeckt.

In der Auswerteeinheit des Sicherheitssensors wird als Objektfeststellungssignal ein binäres Schaltsignal generiert, dessen Schaltzustände angeben, ob sich ein Objekt 5 im Überwachungsbereich befindet oder nicht. Das Schaltsignal wird über eine fehlersichere Ausgangsstruktur des Sicherheitssensors an die Fahrzeugsteuerung 14 ausgegeben. Wird im Schutzfeld 15 ein Objekt 5 erfasst, wird durch das entsprechende Schaltsignal eine Sicherheitsfunktion derart ausgelöst, dass das Fahrzeug 13 angehalten wird.

Figur 4 zeigt ein Blockschaltbild der Sensoranordnung 12 gemäß Figur 3. Wie Figur 3 zeigt, weist der Sicherheitssensor eine Steuerlogik 16 auf, der die Sensormesstechnik 17 des Sicherheitssensors steuert. Die Steuerlogik 16 enthält die Auswerteeinheit des Sicherheitssensors. Die Sensormesstechnik 17 umfasst den Sender 3, den Empfänger 4 und das Strahlführungsmittel in Form des Messkopfs 10 oder in Form der Ablenkeinheit 8, die zur Erfassung von Objekten 5 mittels der Lichtstrahlen 2 dient.

Neben der nicht dargestellten fehlersicheren Ausgangsstruktur ist der Sicherheitssensor mit der Fahrzeugsteuerung 14 des Fahrzeugs 13 über eine Schnittstelle 18 verbunden.

Die Fahrzeugsteuerung 14 bildet im vorliegenden Fall ein Navigationssystem aus. Zur Navigation werden vom Sicherheitssensor über eine Schnittstelle 18 Messwerte, das heißt Distanzwerte von der erfassten Umgebung der Fahrzeugsteuerung 14 weitergegeben.

Weiterhin ist ein Antriebssystem 19 vorgesehen, das einen Antrieb, insbesondere einen elektrischen Antrieb aufweist, mit dem das Strahlführungsmittel in eine Drehbewegung versetzt wird.

Erfindungsgemäß erfolgt die Ansteuerung des Antriebs derart, dass das Strahlführungsmittel mit einer mittleren Drehzahl betrieben wird, wobei dieser Beschleunigungswerte überlagert sind.

Die Vorgabe der mittleren Drehzahl erfolgt softwaregesteuert mittels eines Softwaremoduls in Form eines Drehzahl-Vektors 20.

Die Vorgabe der Beschleunigungswerte erfolgt ebenfalls softwaregesteuert über ein weiteres Softwaremodul in Form eines Beschleunigungsvorgabemoduls 21.

Der Drehzahl-Vektor 20 enthält auswählbare Drehzahlen.

Die Auswahl erfolgt mittels eines von der Steuerlogik 16 gesteuerten Drehzahl-Index. Mit der ausgewählten Drehzahl steuert die Steuerlogik 16 das Antriebssystem 19 des Sicherheitssensors an, das vom Antrieb des Strahlführungsmittels ausgebildet ist. Dadurch wird das Strahlführungsmittel mit der ausgewählten Drehzahl betrieben.

Vorteilhaft ist der Drehzahl-Index und/oder der Drehzahl-Vektor 20 durch eine Prüfsumme abgesichert.

Dadurch wird eine fehlersichere Auswahl der Drehzahl ermöglicht.

Die Drehzahlauswahl kann insbesondere bereits im Produktionsprozess des Sensors 1 erfolgen.

Vorteilhaft ist der Drehzahl-Index ein Konfigurations-Parameter oder wird aus einem Konfigurations-Parameter abgeleitet.

Insbesondere kann der Drehzahl-Index aus der Seriennummer des jeweiligen Sensors 1 abgeleitet werden.

Mit dem Beschleunigungsvergabemodul werden die Beschleunigungswerte generiert, die der mittleren Drehzahl überlagert werden.

Gemäß einer ersten Variante werden die Beschleunigungswerte in einen dem Antrieb zugeordneten Drehmomentregler eingespeist.

Gemäß einer zweiten Variante werden die Beschleunigungswerte in Drehzahländerungen umgerechnet, die der mittleren Drehzahl überlagert werden.

Insbesondere wird die Drehzahländerung durch Integration von Beschleunigungswerten erhalten.

In diesem Fall wird die Drehzahländerung in einen dem Antrieb zugeordneten Drehzahlregler eingespeist.

Der Drehmomentregler bzw. Drehzahlregler ist Bestandteil des Antriebssystems 19.

Prinzipiell können die Beschleunigungswerte nur kurzzeitig und/oder ereignisgesteuert generiert werden.

Insbesondere werden die Beschleunigungswerte abhängig von Blendereignissen generiert.

Ebenso können die Beschleunigungswerte dauerhaft generiert werden.

Generell können die Beschleunigungswerte systematisch oder zufällig generiert werden.

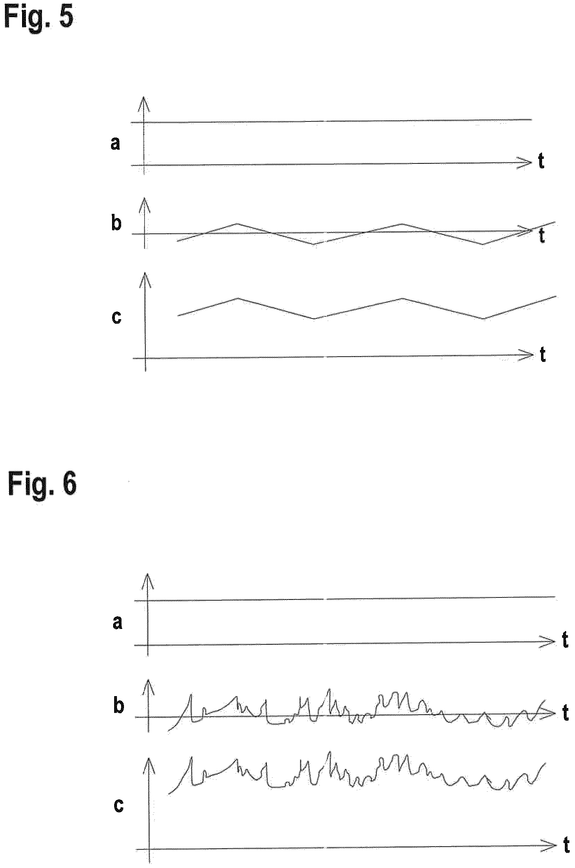

Die Zeitdiagramme der Figuren 5a bis 5c zeigen ein Beispiel einer permanent und systematisch wechselnden Beschleunigung.

Figur 5a zeigt die mittlere Drehzahl. Figur 5b zeigt die im Beschleunigungsvergabemodul berechnete Drehzahländerung. Figur 5c zeigt die resultierende Drehzahl.

Die Zeitdiagramme der Figuren 6a bis 6c zeigen ein Beispiel einer permanent und stochastisch wechselnden Beschleunigung.

Figur 6a zeigt die mittlere Drehzahl. Figur 6b zeigt die ein Beschleunigungsvergabemodul berechnete Drehzahländerung. Figur 6c zeigt die resultierende Drehzahl.

Durch die der mittleren Drehzahl aufgeprägten Beschleunigungswerte werden für verschiedene Sensoren 1 unterschiedliche Drehzahlverläufe für das Strahlführungsmittel erhalten.

Zudem wird erfindungsgemäß zur Generierung des Objektfeststellungssignals, insbesondere des Schaltsignals, eine Mehrfachscanauswertung durchgeführt. Eine Objektmeldung wird nur dann generiert, wenn in mehreren vorzugsweise direkt aufeinanderfolgenden Scans dasselbe Detektionsergebnis erhalten wird. Besonders vorteilhaft werden zwei aufeinanderfolgende Scans 51, 52 zur Generierung des Objektfeststellungssignals herangezogen.

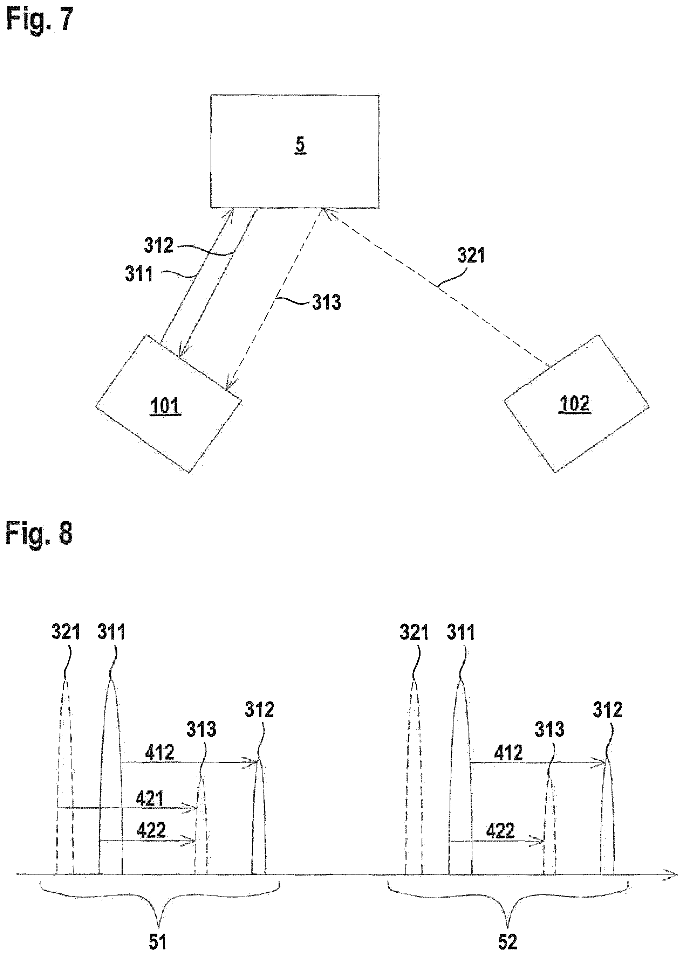

Durch diese Maßnahmen werden gegenseitige Beeinflussungen von Sensoren 1, wie in den Figuren 7 bis 10 veranschaulicht, vermieden.

Figur 7 zeigt schematisch eine Applikation mit zwei optische Sensoren 101, 102, deren Aufbau den Sensoren 1 gemäß Figur 1 beziehungsweise 2 entspricht. Wie Figur 7 zeigt, wird mit dem ersten optischen Sensor 101 ein Objekt 5 detektiert.

Der optische Sensor 101 emittiert hierzu Sendelicht in Form von Sendelichtimpulsen 311, die in Form von Empfangslichtimpulsen 312 vom Objekt 5 zum Empfänger 4 dieses optischen Sensors 101 zurückreflektiert werden. Aus der Lichtlaufzeit dieser Lichtsignale zum Objekt 5 und zurück zum optischen Sensor 101 wird die Distanz des Objekts 5 zum optischen Sensor 101 bestimmt.

Der zweite optische Sensor 102 emittiert ebenfalls Sendelichtimpulse 321 in Richtung des Objekts 5, wobei diese vom Objekt 5 so reflektiert werden, dass diese als Empfangslichtimpulse 313 zum optischen Sensor 101 reflektiert werden, das heißt dort als Störeinstrahlung vorliegen.

Figur 8 zeigt ein Zeitdiagramm der Signalauswertung für die Anordnung der Figur 7 für den Fall, dass die Strahlführungsmittel der optischen Sensoren 101, 102 mit derselben Drehzahl betrieben werden. Dabei sind in Figur 8 die am optischen Sensor 101 erhaltenen Signale für zwei aufeinanderfolgende Scans 51, 52 dargestellt.

Figur 8 zeigt, dass der Sendelichtimpuls 311 des optischen Sensors 101 zeitlich versetzt zum Sendelichtimpuls 321 des optischen Sensors 102 emittiert wird. Der Sendelichtimpuls 311 des optischen Sensors 101 wird vom Objekt 5 zurückreflektiert und trifft um eine Zeitdifferenz 412 als Empfangslichtimpuls 312 versetzt auf den Empfänger 4 des optischen Sensors 101. Diese Zeitdifferenz 412 entspricht der Lichtlaufzeit des Sendelichtimpulses 311 zum Objekt 5 und zurück zum Empfänger 4 des optischen Sensors 101. Dies liefert einen korrekten Distanzwert für die Distanz des Objekts 5 zum optischen Sensor 101.

Jedoch wird, wie Figur 8 zeigt, der Sendelichtimpuls 321 des zweiten optischen Sensors 102 vom Objekt 5 zum optischen Sensor 101 reflektiert und generiert dort den Empfangslichtimpuls 313. Der optische Sensor 101 registriert dabei die Zeitdifferenz 422 zwischen dem Sendelichtimpuls 311 und dem eines Störlichtpuls bildenden Empfangslichtimpulses 313 des zweiten optischen Sensors 102.

Dies führt zur Generierung eines verfälschten Distanzwerts für die Distanz des Objekts 5 zum optischen Sensor 101.

In Figur 8 ist für den Scan 51 zudem die Zeitdifferenz 421 eingezeichnet, das für die Distanzmessung des zweiten optischen Sensors 102 erhalten wird.

Da die Strahlführungsmittel der optischen Sensoren 101, 102 in diesem Fall mit derselben Drehzahl betrieben werden, wiederholen sich die Signale während des ersten Scans 51 exakt wieder im zweiten Scan 52. Damit registriert der optische Sensor 101 wieder die verfälschte Zeitdifferenz 422. Da in zwei aufeinanderfolgenden Scans 51, 52 die Zeitdifferenz 422 registriert wird, wird dieses zur Generierung des Objektfeststellungssignals herangezogen, wodurch die Distanz des Objekts 5 im optischen Sensor 101 falsch bestimmt wird.

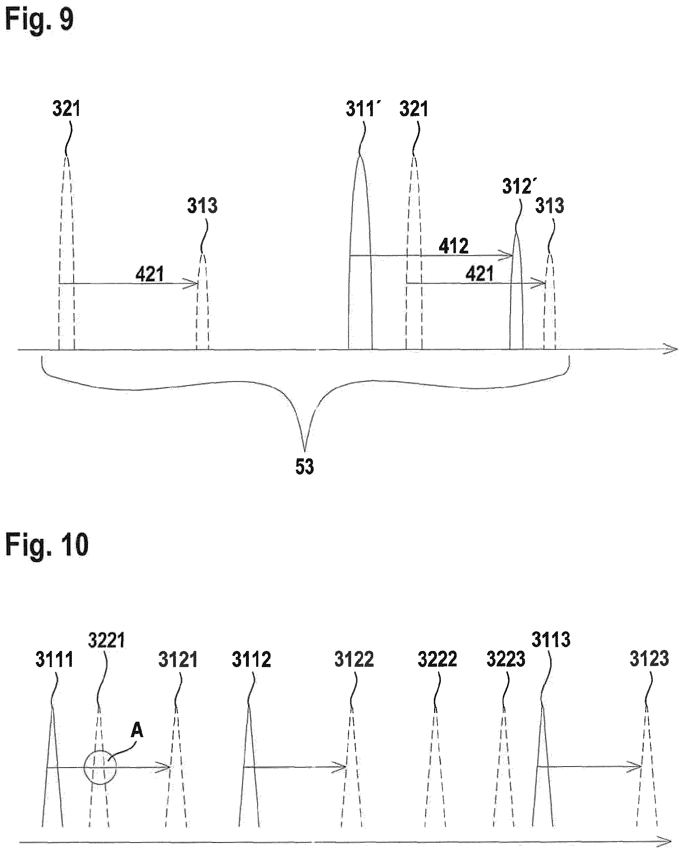

Um derartige Fehldetektionen zu vermeiden, werden die Strahlführungsmittel der optischen Sensoren 101, 102 mit unterschiedlichen Drehzahlen betrieben, was in Figur 9 veranschaulicht ist.

In Figur 9 sind mit dem Zeitintervall 53 zwei aufeinanderfolgende Scans 51, 52 des optischen Sensors 102 dargestellt, wobei bei jedem Scan 51, 52 der optische Sensor 102 einen Sendelichtimpuls 321 emittiert, der zum Objekt 5 geführt ist und von dort zurück zum Empfänger 4 des optischen Sensors 102 als Empfangslichtimpuls 313 geführt ist. In den beiden Scans 51, 52 werden im optischen Sensor 102 mit den Sendelichtimpulsen 321 und Empfangslichtimpuls 313 zweimal dieselbe Zeitdifferenz 421 gemessen. Da in zwei aufeinanderfolgenden Scans 51, 52 dieselbe Zeitdifferenz 421 gemessen wird, wird diese zur Generierung des Objektfeststellungssignals im optischen Sensor 102 herangezogen.

Der optische Sensor 101 emittiert Sendelichtimpulse 311', die als Empfangslichtimpulse 312' von diesem optischen Sensor 101 empfangen werden, womit im optischen Sensor 101 Distanzmessungen durchgeführt werden.

Die Sendelichtimpulse 311' des optischen Sensors 101 werden auch vom Objekt 5 als Störstrahlung in den optischen Sensor 102 reflektiert. Jedoch führt dies, anders als bei dem Fall von Figur 8, nicht zu Fehldetektionen. Da die Strahlführungsmittel der optischen Sensoren 101, 102 mit unterschiedlichen Drehzahlen betrieben werden, erfolgt eine zeitliche Überlappung der Messintervalle der optischen Sensoren 101, 102 nur während des zweiten Scans 51, 52 des optischen Sensors 102 nicht jedoch während des ersten.

Allgemein ausgedrückt kann es durch die unterschiedlichen Drehzahlen der Strahlführungsmittel der beiden optischen Sensoren 101, 102 nicht vorkommen, dass durch eine Störeinstrahlung einer der optischen Sensoren 101 oder 102 in den anderen optischen Sensor 102 oder 101 in zwei aufeinanderfolgenden Scans 51, 52 der gleiche verfälschte Distanzmesswert registriert wird. Da jedoch zur Generierung des Objektfeststellungssignals im optischen Sensor 101 oder 102 in wenigstens zwei aufeinanderfolgenden Scans 51, 52 derselbe oder ein ähnlicher, zumindest geringerer Distanzwert erhalten werden muss, damit das Objektfeststellungssignal generiert wird, werden fehlerhafte Messungen aufgrund von Störeinstrahlungen verworfen und führen nicht zur Generierung verfälschter Objektfeststellungssignalen. Dieses Verfahren kann auch auf mehr als zwei aufeinanderfolgenden Scans 51, 52 angewendet werden, z.B. derart, dass mindestens N aufeinanderfolgende Scans 51, 52 bewertet werden und eine Objektfeststellung nur dann erfolgt, wenn in allen N Scans 51, 52 derselbe oder ähnliche Distanzwerte ermittelt werden, bzw. wenn in mindestens einem der N Scans 51, 52 ein anderer oder größerer Distanzwert ermittelt wird und damit kein Objektfeststellungssignal generiert wird.

Die Funktionsweise des erfindungsgemäßen Verfahrens ist für die Anordnung gemäß Figur 7 weiterhin in Figur 10 veranschaulicht.

In diesem Zeitdiagramm sind vom Sender 3 der optischer Sensor 101 emittierte, aufeinanderfolgende Sendelichtimpulse 3111, 3112, 3113 und die von einem Objekt 5 zu diesem optischen Sensor 102 zurückreflektierten aufeinander folgenden Empfangslichtimpuls 3121, 3122, 3123 dargestellt. Damit erfolgt in drei aufeinanderfolgenden Messungen eine Distanzbestimmung des Objekts 5.

Vom optischer Sensor 102 werden als Störlicht Sendelichtimpulse 3221, 3222, 3223 in den Empfängern 4 des ersten optischen Sensors 101 eingestrahlt.

Wie in Figur 10 mit A gekennzeichnet, führt der erste Störlicht bildende Sendelichtimpuls 3221 zu einer Störung der Distanzmessung.

Da jedoch bei dem optischen Sensor 101 der mittleren Drehzahl für das Strahlführungsmittel Beschleunigungswerte überlagert sind, unterscheidet sich dessen resultierende Drehzahl von der resultierenden Drehzahl des optischen Sensors 102.

Aufgrund dessen sind die Sendelichtimpulse 3222 und 3223 aus den Messintervallen des ersten optischen Sensors 101 (Zeitdifferenz des Sendelichtimpuls 3112 und des Empfangslichtimpuls bzw. Zeitdifferenz des Sendelichtimpuls 3113 und des Empfangslichtimpuls 3123) herausgeschoben und beeinträchtigen diese Distanzmessungen nicht mehr.

Werden zur Generierung des Objektfeststellungssignals wenigsten drei Messungen, d.h. drei Scans 51, 52 herangezogen, wird dadurch die Störung ausgeblendet und der optische Sensor 101 ermittelt die Objektdistanz fehlerfrei.

### Bezugszeichenliste

- (1): Sensor
- (2): Lichtstrahl
- (3): Sender
- (4): Empfänger
- (5): Objekt
- (6): Gehäuse
- (7): Empfangsoptik
- (8): Ablenkeinheit
- (9): Drehspiegel
- (10): Messkopf
- (11): Sockel
- (12): Sensoranordnung
- (13): Fahrzeug
- (14): Fahrzeugsteuerung
- (15): Schutzfeld
- (16): Steuerlogik
- (17): Sensormesstechnik
- (18): Schnittstelle
- (19): Antriebssystem
- (20): Drehzahl-Vektor
- (21): Beschleunigungsvorgabemodul
- (51): Scan
- (52): Scan
- (53): Zeitintervall
- (101): Optischer Sensor
- (102): Optischer Sensor
- (311, 311'): Sendelichtimpuls
- (312, 312'): Empfangslichtimpuls
- (313): Empfangslichtimpuls
- (321): Sendelichtimpuls
- (412): Zeitdifferenz
- (421): Zeitdifferenz
- (422): Zeitdifferenz
- (3111, 3112): Sendelichtimpuls
- (3113, 3221): Sendelichtimpuls
- (3121, 3122): Empfangslichtimpuls
- (3222, 3223): Sendelichtimpuls
- D: Drehachse

## Patentansprüche

1. Sensor (1) zur Erfassung von Objekten (5) in einem Überwachungsbereich mit einem Sendestrahlen emittierenden Sender (3) und einem Empfangsstrahlen empfangenden Empfänger (4), mit einem Strahlführungsmittel, das eine Drehbewegung ausführt, so dass die Sendestrahlen innerhalb aufeinanderfolgenden Scans (51, 52) periodisch innerhalb des Überwachungsbereichs geführt sind, und mit einer Auswerteeinheit, in welcher abhängig von Empfangssignalen des Empfängers (4) ein Objektfeststellungssignal generiert wird, wobei zur Generierung des Objektfeststellungssignals Empfangssignale mehrerer Scans (51, 52) herangezogen werden, und wobei die Drehbewegung des Strahlführungsmittel mittels eines Antriebs derart generiert wird, dass einer mittleren Drehzahl Beschleunigungswerte überlagert sind, wodurch sich die Drehzahl der Strahlführungsmittel und damit die Zeitdauer der einzelnen Scans, die mit dem Sensor (1) zur Objekterfassung durchgeführt werden, ändert, **dadurch gekennzeichnet, dass** die Beschleunigungswerte als eine zyklische Folge oder eine Zufallsfolge von Beschleunigungswerten generiert werden.

2. Sensor (1) nach Anspruch 1, **dadurch gekennzeichnet, dass** die Beschleunigungswerte in einen dem Antrieb zugeordneten Drehmomentregler eingespeist werden.

3. Sensor (1) nach Anspruch 1, **dadurch gekennzeichnet, dass** die Beschleunigungswerte in Drehzahländerungen umgerechnet werden, die der mittleren Drehzahl überlagert werden.

4. Sensor (1) nach Anspruch 3, **dadurch gekennzeichnet, dass** die Drehzahländerungen durch Integration von Beschleunigungswerten erhalten werden.

5. Sensor (1) nach einem der Ansprüche 3 oder 4, **dadurch gekennzeichnet, dass** die Drehzahländerungen in einen dem Antrieb zugeordneten Drehzahlregler eingespeist werden.

6. Sensor (1) nach einem der Ansprüche 1 bis 5, **dadurch gekennzeichnet, dass** die Beschleunigungswerte ereignisgesteuert generiert werden.

7. Sensor (1) nach Anspruch 6, **dadurch gekennzeichnet, dass** die Beschleunigungswerte abhängig von Blendereignissen generiert werden.

8. Sensor (1) nach einem der Ansprüche 1 bis 7, **dadurch gekennzeichnet, dass** die mittlere Drehzahl mittels eines Drehzahl-Index aus einem Drehzahl-Vektor (20) abgeleitet wird.

9. Sensor (1) nach Anspruch 8, **dadurch gekennzeichnet, dass** der Drehzahl-Index und/oder der Drehzahl-Vektor (20) durch eine Prüfsumme abgesichert ist.

10. Sensor (1) nach einem der Ansprüche 8 oder 9, **dadurch gekennzeichnet, dass** der Drehzahl-Index ein Konfigurations-Parameter ist oder aus einem Konfigurations-Parameter abgeleitet wird.

11. Sensor (1) nach einem der Ansprüche 8 oder 9, **dadurch gekennzeichnet, dass** dieser eine Seriennummer aufweist, und dass der Drehzahl-Index aus der Seriennummer abgeleitet ist.

12. Sensor (1) nach einem der Ansprüche 1 bis 11, **dadurch gekennzeichnet, dass** in dessen Produktionsprozess die Drehzahl des Strahlführungsmittels festgelegt wird.

13. Sensor (1) nach einem der Ansprüche 1 bis 12, **dadurch gekennzeichnet, dass** zur Generierung eines Objektfeststellungssignals die Empfangssignale zweier oder mehrerer direkt aufeinanderfolgenden Scans (51, 52) herangezogen werden.

14. Sensor (1) nach einem der Ansprüche 1 bis 13, **dadurch gekennzeichnet, dass** der Sender (3) und der Empfänger (4) in einem rotierenden Messkopf (10) gelagert sind, welcher das Strahlführungsmittel bildet.

15. Sensor (1) nach einem der Ansprüche 1 bis 13, **dadurch gekennzeichnet, dass** die Sendestrahlen über eine rotierende Ablenkeinheit (8) geführt sind, die das Strahlführungsmittel bildet.

16. Sensor (1) nach Anspruch 15, **dadurch gekennzeichnet, dass** die Ablenkeinheit (8) einen Drehspiegel (9) oder ein Polygonspiegelrad aufweist.

17. Sensor (1) nach einem der Ansprüche 1 bis 10, **dadurch gekennzeichnet, dass** dieser ein optischer Sensor (101, 102) oder ein Radarsensor ist.

18. Sensor (1) nach einem der Ansprüche 1 bis 17, **dadurch gekennzeichnet, dass** dieser ein Flächendistanzsensor ist.

19. Sensor (1) nach einem der Ansprüche 1 bis 18, **dadurch gekennzeichnet, dass** dieser ein Sicherheitssensor ist.

20. Sensor (1) nach einem der Ansprüche 1 bis 19, **dadurch gekennzeichnet, dass** dieser eine Schnittstelle (18) zum Anschluss an eine externe Steuereinheit aufweist.

21. Sensor (1) nach Anspruch 20, **dadurch gekennzeichnet, dass** über die Schnittstelle (18) Messdaten wie Objektkontur, Objektposition oder Objektentfernung an die externe Steuereinheit übertragen werden.

22. Sensor (1) nach einem der Ansprüche 20 oder 21, **dadurch gekennzeichnet, dass** die externe Steuereinheit ein Navigationssystem ausbildet.

23. Sensor (1) nach einem der Ansprüche 1 bis 22, **dadurch gekennzeichnet, dass** dieser auf einer mobilen Einheit angeordnet ist.

24. Verfahren zum Betrieb eines Sensors (1) zur Erfassung von Objekten (5) in einem Überwachungsbereich mit einem Sendestrahlen emittierenden Sender (3) und einem Empfangsstrahlen empfangenden Empfänger (4), mit einem Strahlführungsmittel, das eine Drehbewegung ausführt, so dass die Sendestrahlen innerhalb aufeinanderfolgenden Scans (51, 52) periodisch innerhalb des Überwachungsbereichs geführt sind, und mit einer Auswerteeinheit, in welcher abhängig von Empfangssignalen des Empfängers (4) ein Objektfeststellungssignal generiert wird, wobei zur Generierung des Objektfeststellungssignals Empfangssignale mehrerer Scans (51, 52) herangezogen werden, und wobei die Drehbewegung des Stahlführungsmittel mittels eines Antriebs derart generiert wird, dass einer mittleren Drehzahl Beschleunigungswerte überlagert sind, wodurch sich die Drehzahl der Strahlführungsmittel und damit die Zeitdauer der einzelnen Scans, die mit dem Sensor (1) zur Objekterfassung durchgeführt werden, ändert, **dadurch gekennzeichnet, dass** die Beschleunigungswerte als eine zyklische Folge oder eine Zufallsfolge von Beschleunigungswerten generiert werden.

## Claims

1. A sensor (1) for detecting objects (5) within a monitoring area, comprising a transmitter (3) emitting transmission beams and a receiver (4) receiving reception beams, comprising a beam-guiding means which performs a rotary movement such that the transmission beams are guided periodically within successive scans (51, 52) are periodically guided within the monitoring area, and comprising an evaluation unit in which an object detection signal is generated depending on reception signals from the receiver (4), wherein reception signals from several scans (51, 52) are utilised, and wherein the rotational movement of the beam-guiding means is generated by means of a drive in such a way that acceleration values are superimposed on an average rotational speed, whereby the rotational speed of the beam-guiding means and thus the duration of the individual scans carried out with the sensor (1) for object detection varies, **characterised in that** the acceleration values are generated as a cyclic sequence or a random sequence of acceleration values.

2. Sensor (1) according to claim 1, **characterised in that** the acceleration values are fed into a torque controller associated with the drive.

3. Sensor (1) according to claim 1, **characterised in that** the acceleration values are converted into changes in rotational speed which are superimposed on the average rotational speed.

4. Sensor (1) according to claim 3, **characterised in that** the changes in rotational speed are obtained by integrating the acceleration values.

5. A sensor (1) according to one of claims 3 or 4, **characterised in that** the changes in speed are fed into a speed controller associated with the drive.

6. A sensor (1) according to any one of claims 1 to 5, **characterised in that** the acceleration values are generated in an event-driven manner.

7. A sensor (1) according to claim 6, **characterised in that** the acceleration values are generated in response to shutter events.

8. A sensor (1) according to any one of claims 1 to 7, **characterised in that** the average speed is derived from a speed vector (20) by means of a speed index.

9. Sensor (1) according to claim 8, **characterised in that** the speed index and/or the speed vector (20) is validated by a checksum.

10. A sensor (1) according to any one of claims 8 or 9, **characterised in that** the speed index is a configuration parameter or is derived from a configuration parameter.

11. A sensor (1) according to one of claims 8 or 9, **characterised in that** it has a serial number, and **in that** the rotational speed index is derived from the serial number.

12. A sensor (1) according to any one of claims 1 to 11, **characterised in that** the rotational speed of the beam-guiding means is determined during its production process.

13. A sensor (1) according to any one of claims 1 to 12, **characterised in that** the received signals from two or more directly consecutive scans (51, 52) are used to generate an object detection signal.

14. A sensor (1) according to any one of claims 1 to 13, **characterised in that** the transmitter (3) and the receiver (4) are mounted in a rotating measuring head (10), which forms the beam-guiding means.

15. A sensor (1) according to any one of claims 1 to 13, **characterised in that** the transmitted beams are guided via a rotating deflection unit (8), which forms the beam-guiding means.

16. A sensor (1) according to claim 15, **characterised in that** the deflection unit (8) comprises a rotating mirror (9) or a polygonal mirror wheel.

17. A sensor (1) according to any one of claims 1 to 10, **characterised in that** it is an optical sensor (101, 102) or a radar sensor.

18. A sensor (1) according to any one of claims 1 to 17, **characterised in that** it is a surface distance sensor.

19. A sensor (1) according to any one of claims 1 to 18, **characterised in that** it is a safety sensor.

20. A sensor (1) according to any one of claims 1 to 19, **characterised in that** it comprises an interface (18) for connection to an external control unit.

21. A sensor (1) according to claim 20, **characterised in that** measurement data such as object contour, object position or object distance are transmitted to the external control unit via the interface (18).

22. A sensor (1) according to any one of claims 20 or 21, **characterised in that** the external control unit constitutes a navigation system.

23. A sensor (1) according to any one of claims 1 to 22, **characterised in that** it is arranged on a mobile unit.

24. A method for operating a sensor (1) for detecting objects (5) within a monitoring area, comprising a transmitter (3) emitting transmission beams and a receiver (4) receiving reception beams, comprising a beam-guiding means which performs a rotational movement such that the transmission beams are guided periodically within successive scans (51, 52) are periodically guided within the monitoring area, and comprising an evaluation unit in which an object detection signal is generated depending on reception signals from the receiver (4), wherein reception signals from several scans (51, 52) are utilised, and wherein the rotational movement of the beam-guiding means is generated by means of a drive in such a way that acceleration values are superimposed on an average rotational speed, whereby the rotational speed of the beam-guiding means and thus the duration of the individual scans carried out with the sensor (1) for object detection varies,
**characterised in that** the acceleration values are generated as a cyclic sequence or a random sequence of acceleration values.

## Revendications

1. Capteur (1) destiné à détecter des objets (5) dans une zone de surveillance, comprenant un émetteur (3) émettant des faisceaux d'émission et un récepteur (4) recevant des faisceaux de réception, comprenant un moyen de guidage de faisceaux qui effectue un mouvement de rotation de telle sorte que les faisceaux d'émission soient guidés périodiquement à l'intérieur de la zone de surveillance au cours de balayages successifs (51, 52) sont guidés périodiquement à l'intérieur de la zone de surveillance, et comprenant une unité d'évaluation dans laquelle un signal de détection d'objet est généré en fonction des signaux de réception du récepteur (4), les signaux de réception de plusieurs balayages (51, 52) sont pris en compte, et le mouvement de rotation du moyen de guidage du faisceau étant généré au moyen d'un entraînement de telle sorte que des valeurs d'accélération se superposent à une vitesse de rotation moyenne, ce qui fait varier la vitesse de rotation du moyen de guidage du faisceau et, par conséquent, la durée des balayages individuels effectués avec le capteur (1) pour la détection d'objets, **caractérisé en ce que** les valeurs d'accélération sont générées sous la forme d'une séquence cyclique ou d'une séquence aléatoire de valeurs d'accélération.

2. Capteur (1) selon la revendication 1, **caractérisé en ce que** les valeurs d'accélération sont transmises à un régulateur de couple associé à l'entraînement.

3. Capteur (1) selon la revendication 1, **caractérisé en ce que** les valeurs d'accélération sont converties en variations de vitesse de rotation qui sont superposées à la vitesse de rotation moyenne.

4. Capteur (1) selon la revendication 3, **caractérisé en ce que** les variations de vitesse de rotation sont obtenues par intégration des valeurs d'accélération.

5. Capteur (1) selon l'une des revendications 3 ou 4, **caractérisé en ce que** les variations de vitesse de rotation sont transmises à un régulateur de vitesse de rotation associé à l'entraînement.

6. Capteur (1) selon l'une des revendications 1 à 5, **caractérisé en ce que** les valeurs d'accélération sont générées en fonction d'événements.

7. Capteur (1) selon la revendication 6, **caractérisé en ce que** les valeurs d'accélération sont générées en fonction d'événements de diaphragme.

8. Capteur (1) selon l'une des revendications 1 à 7, **caractérisé en ce que** la vitesse de rotation moyenne est dérivée d'un vecteur de vitesse de rotation (20) au moyen d'un indice de vitesse de rotation.

9. Capteur (1) selon la revendication 8, **caractérisé en ce que** l'indice de vitesse de rotation et/ou le vecteur de vitesse de rotation (20) est validé par une somme de contrôle.

10. Capteur (1) selon l'une des revendications 8 ou 9, **caractérisé en ce que** l'indice de vitesse de rotation est un paramètre de configuration ou est dérivé d'un paramètre de configuration.

11. Capteur (1) selon l'une des revendications 8 ou 9, **caractérisé en ce qu'**il comporte un numéro de série et **en ce que** l'indice de vitesse de rotation est dérivé du numéro de série.

12. Capteur (1) selon l'une des revendications 1 à 11, **caractérisé en ce que** la vitesse de rotation du moyen de guidage du faisceau est définie au cours de son processus de fabrication.

13. Capteur (1) selon l'une des revendications 1 à 12, **caractérisé en ce que**, pour générer un signal de détection d'objet, on utilise les signaux de réception de deux ou plusieurs balayages (51, 52) se succédant directement.

14. Capteur (1) selon l'une des revendications 1 à 13, **caractérisé en ce que** l'émetteur (3) et le récepteur (4) sont montés dans une tête de mesure rotative (10) qui forme le moyen de guidage du faisceau.

15. Capteur (1) selon l'une des revendications 1 à 13, **caractérisé en ce que** les faisceaux d'émission sont guidés par une unité de déviation rotative (8) qui constitue le moyen de guidage de faisceau.

16. Capteur (1) selon la revendication 15, **caractérisé en ce que** l'unité de déviation (8) comporte un miroir rotatif (9) ou une roue à miroirs polygonale.

17. Capteur (1) selon l'une des revendications 1 à 10, **caractérisé en ce qu'**il s'agit d'un capteur optique (101, 102) ou d'un capteur radar.

18. Capteur (1) selon l'une des revendications 1 à 17, **caractérisé en ce qu'**il s'agit d'un capteur de distance de surface.

19. Capteur (1) selon l'une des revendications 1 à 18, **caractérisé en ce qu'**il s'agit d'un capteur de sécurité.

20. Capteur (1) selon l'une des revendications 1 à 19, **caractérisé en ce qu'**il comporte une interface (18) destinée à être raccordée à une unité de commande externe.

21. Capteur (1) selon la revendication 20, **caractérisé en ce que** des données de mesure telles que le contour, la position ou la distance d'un objet sont transmises à l'unité de commande externe via l'interface (18).

22. Capteur (1) selon l'une des revendications 20 ou 21, **caractérisé en ce que** l'unité de commande externe constitue un système de navigation.

23. Capteur (1) selon l'une des revendications 1 à 22, **caractérisé en ce qu'**il est disposé sur une unité mobile.

24. Procédé de fonctionnement d'un capteur (1) destiné à la détection d'objets (5) dans une zone de surveillance, comprenant un émetteur (3) émettant des faisceaux d'émission et un récepteur (4) recevant des faisceaux de réception, comprenant un moyen de guidage de faisceaux qui effectue un mouvement de rotation de telle sorte que les faisceaux d'émission soient guidés périodiquement à l'intérieur de balayages successifs (51, 52) à l'intérieur de la zone de surveillance, et comprenant une unité d'évaluation dans laquelle un signal de détection d'objet est généré en fonction des signaux de réception du récepteur (4), les signaux de réception de plusieurs balayages (51, 52) sont pris en compte, et le mouvement de rotation du moyen de guidage du faisceau étant généré au moyen d'un entraînement de telle sorte que des valeurs d'accélération se superposent à une vitesse de rotation moyenne, ce qui fait varier la vitesse de rotation du moyen de guidage du faisceau et, par conséquent, la durée des balayages individuels effectués avec le capteur (1) pour la détection d'objets,
**caractérisé en ce que** les valeurs d'accélération sont générées sous la forme d'une séquence cyclique ou d'une séquence aléatoire de valeurs d'accélération.
